**Europäisches Patentamt**

**European Patent Office**

**Office européen des brevets**

(19)

(11) Publication number : **0 395 569 B1**

## EUROPEAN PATENT SPECIFICATION

(12)

(45) Date of publication of patent specification :
30.12.92 Bulletin 92/53

(51) Int. Cl.⁵ : **A23D 9/00, A23D 7/00**

(21) Application number : **90610027.6**

(22) Date of filing : **24.04.90**

(54) A fatty product and a process for the production of same.

Consolidated with 90907183.9/0470148
(European application No./publication No.) by
decision dated 18.03.92.

(30) Priority : **27.04.89 DK 2032/89**

(43) Date of publication of application :
**31.10.90 Bulletin 90/44**

(45) Publication of the grant of the patent :
**30.12.92 Bulletin 92/53**

(84) Designated Contracting States :
**AT BE CH DE DK ES FR GB GR IT LI LU NL SE**

(56) References cited :
EP-A- 0 285 198
EP-A- 0 304 115
EP-A- 0 319 360
DE-A- 3 643 848
FR-A- 573 718
FR-A- 2 612 373
GB-A- 2 148 713

(56) References cited :
**DERWENT FILE SUPPLIER WPIL, 1986, accession no. 86-117166 [18], Derwent Publications Ltd, London, GB**
**DERWENT FILE SUPPLIER WPIL, 1985, accession no. 85-102858 [17], Derwent Publications Ltd, London, GB**

(73) Proprietor : **Katborg, Jon**
**Lien 15, Vester Vandet**
**DK-7700 Thisted (DK)**
Proprietor : **Poulsen, Kent Elgaard**
**Tystrupvej 47**
**DK-4250 Fuglebjerg (DK)**

(72) Inventor : **Katborg, Jon**
**Lien 15, Vester Vandet**
**DK-7700 Thisted (DK)**
Inventor : **Poulsen, Kent Elgaard**
**Tystrupvej 47**
**DK-4250 Fuglebjerg (DK)**

(74) Representative : **Nielsen, Leif et al**
**c/o Lehmann & Ree A/S Ryesgade 3**
**DK-8000 Aarhus C (DK)**

## Description

Background of the Invention.

The present invention relates to a fatty product containing an inert gas, at least one polyunsaturated fatty acid, and at least 10 percent by weight of solid fat and optionally an antioxidant.

In a known process (Gillies, M.T., Shortenings, Margarines and Food Oils, Noyes Data Corporation, New Jersey, 1974, 333 pp.) for the production of a fatty product of the kind described above (e.g. various types of shortening and whipped margarine) air or an inert gas is whipped into a liquid fat or into a liquid water-in-oil emulsion.

Thus, subsequent to suitable cooling and kneading a fat having a soft texture is obtained at low temperatures (0°C-5°C). Moreover, the whipping of air into fats for use as shortening serves to impart to the product an opaque, margarine-like appearance. The whipping of air or inert gas into margarine is effected in order to improve the frying properties and the organoleptic properties of the margarine and to protect it from the formation of mold.

In the production of the kind of fat known as shortening, the fats and oils used are always suitable for baking or frying purposes, i.e. fats which tolerate heating up to about 150°C-300°C according to the application. Thus, the use of fats containing polyunsaturated fatty acids is much restricted.

Apart from being used for baking and frying, margarine is used as a fatty spread and for this particular purpose it is often produced with a content of polyunsaturated fatty acids which essentially consist of linoleic acid comprising two double bonds (18:2 n-6) and which frequently have a low content of α-linolenic acid comprising three double bonds (18:3 n-3).

A disadvantage of the disclosed water-in-oil emulsion is that oxygen is introduced into the fatty product in the water phase. Dissolved oxygen in the water phase reduces the shelf life of fatty products containing polyunsaturated fatty acids considerably, because polyunsaturated fatty acids having more than two double bonds are very easily oxidized, and the existing technology does not disclose how to produce a margarine emulsion in an oxygen-free environment.

Thus, up till now, it has been impossible to produce a fatty spread having a long shelf life and an increased content of polyunsaturated fatty acids of the n-3 series comprising at least 4 double bonds and/or of the n-6 series comprising least 3 double bonds.

This is unfortunate since a series of tests carried out in the past 20 years or so (Dyerberg, J., Linolenate-derived Polyunsaturated Fatty Acids and Prevention of Atherosclerosis, Nutrition Reviews, vol. 44, No. 4, 1986, pp 125-134) have shown that a daily intake of a few grammes of i.a. polyunsaturated fatty acids comprising 5 double bonds (20:5 n-3 and 22:5 n-3), which are mainly present in marine oils, particularly fish oils, and in phyto-plankton and algae, reduces the cholesterol content of the blood and, accordingly, also reduces the risk of developing heart and vascular disorders by virtue of their conversion into the physiologically active prostaglandin $E_3$ (PGE$_3$).

The intake of linoleic acid alone, which has two double bonds and which is converted slowly in the organism into the physiologically active prostagladins PGE$_1$ and PGE$_2$, is frequently not sufficient to obtain a corresponding effect, because the first step in such a conversion process, wherein linoleic acid is converted into γ-linolenic acid, is catalysed by the enzyme δ-6-desaturase which frequently has insufficient activity in man (Hassam, A.G., The Role of Evening Primrose Oil Nutrition and Disease., Jn: The Role of Fats in Human Nutrition, Ellis Horwood Limited, Chicester, 1985, pp 84-100). γ-Linolenic acid (18:3 n-6), which is present in vegetable oils, such as evening primrose oil, borage oil, and black-currant seed oil, is therefore a more efficient precursor in the biosynthesis of PGE$_1$ and PGE$_2$ (Gurr, M.J., Role of Fats in Food and Nutrition, Elsevier Applied Science Publishers, London New York, 1984, 170 pp), and this fact has led to an increasing interest in the use of γ-linolenic acid in i.a. food products.

However, it has not been possible to use commercially an amply occuring raw material, such as fish oil and in particular sand eel oil having a high content (15% by weight to 30% by weight) of n-3 fatty acids and vegetable oils, such as the above mentioned, having a high content (14% by weight to 33% by weight) of n-6 fatty acids in their unhydrogenated state for the sake of the shelf life thereof, and thus the desirable nutritive and wholesome effects thereof have not been fully utilized.

DE-A-3,643,848 discloses a method for production of glyceride oils having a content of unsaturated fatty acids. The method comprises a refining from which the glyceride oils is extruded. However, this document does not indicate any step means for protecting the product against oxidization.

It is the object of the present invention to produce a stable and physiologically active fatty product of the kind described above.

This object is achieved with the fatty product of the invention which is characterized in that it has a maximum water content of 1 percent by weight and that it further comprises at least 1 percent by weight of polyunsaturated fatty acids of the n-3 series comprising at least four double bonds and/or at least 0.5 percent by weight of polyunsaturated fatty acids of the n-6 series comprising at least three double bonds.

Surprisingly, it has been found that the highly unsaturated fatty acids are stabilized in a fatty product into which inert gas and a suitable amount of antioxidants have been whipped, thus imparting to the final product a peroxide number according to the IUPAC (2.501) of less than about 1 meq/kg.

The use of a substantially water-free fat makes it possible to avoid the undesirable effects of oxygen dissolved in the water phase with respect to the durability of a product containing polyunsaturated fatty acids. At the same time the whipped-in inert gas, e.g. $N_2$ or $CO_2$, protects the fats from oxidization since no further $O_2$ can be dissolved in an $N_2$-saturated fat.

Furthermore, the addition of antioxidants, such as alkylgallates, ascorbyl fatty acid esters and tocopherols, affords further improvement of the durability of the products according to the invention and, additionally, the antioxidants also aid in the protection of the fatty acids against oxidation occurring in the organism.

A preferred content of inert gas in the form of $N_2$ in the fatty product corresponds to a fatty product density of 0,65-0,85 kg/l. The requisite amount of whipped-in inert gas increases with increaing amounts of hydrogenated fat in the product.

The invention further relates to a process for the production of a fatty product of the above described type and wherein an inert gas is whipped into a mixture of fatty substances which was initially softened by heating and which has a maximum water content of 1% and contains at least 10 percent by weight of a solid fat and optionally an antioxidant at room temperature, and wherein the product thus produced is cooled. The process is characterized in using a mixture of fatty substances containing at least 1 percent by weight of a polyunsaturated fatty acid of the n-3 series comprising at least four double bonds and/or at least 0.5 percent by weight of a polyunsaturated fatty acid of the n-6 series comprising at least three double bonds.

The products produced in the process according to the invention may be packaged like similar products containing polyunsaturated fatty acids comprising two double bonds and having a low content of polyunsaturated fatty acids comprising three or more double bonds.

In the following examples the invention will be described in further detail.

Example 1

A mixture of fatty substances comprises 10 percent by weight of refined vacuumdeodorized fish oil (sand eel oil), 63 percent by weight of refined vacuumdeodorized rapeseed oil and 17 percent by weight of selectively hydrogenated palm stearin having the following approximate solid-phase values (pulsated-NMR): 95% at 10°C, 94% at 20°C, 83% at 30°C, 59% at 40°C, 6% at 50°C. Antioxidants are added to the mixture of fatty substances in the form of propylgallate in an amount of 50 ppm, ascorbylpalmitate in an amount of 22 ppm, and natural tocopherol in an amount of 1,000 ppm. Flavours are added in an amount of 100 ppm.

The mixture of fatty substances (including the antioxidants and flavours) is subsequently heated to 45°C for complete melting and is then cooled to 4°C by passage through a one-pipe pilot plant of the Gerstenberg & Agger type. A nitrogen amount ($N_2$) adjusted so as to impart to the final product a density of 0.65 g/ml is introduced into the suction part of the high-pressure plant pump via a distribution nozzle which pump is set to yield 20 kgs of product per hour. The product is filled into cups immediately upon the pipe cooler treatment without using any dwelling pipes. The final product is stored at a maximum temperature of 10°C.

The fatty acid composition of the fish oil is as follows:

| Fatty acid | % |
|---|---|
| C 14:0 | 8.0 |
| C 15:0 | 0.3 |
| C 16:0 | 17.4 |
| C 16:1 | 9.5 |
| C 16:2 | 0.6 |
| C 18:0 | 1.2 |
| C 18:1 | 9.1 |
| C 16:4 | 0.5 |
| C 18:2 | 1.9 |
| C 18:3+20:1 | 8.9 |
| C 18:4 n-3 | 3.9 |
| C 22:1 | 13.3 |
| C 20:4 n-3 | 0.7 |
| C 20:5 n-3 | 10.5 |
| C 24:1 | 1.6 |
| C 22:4 | 0.8 |
| C 22:5 n-3 | 0.8 |
| C 22:6 n-3 | 9.4 |

Example 2

The use of a mixture of fatty substances and the process of example 1 are repeated except that 20 percent by weight of refined vacuumdeodorized fish oil having the fatty acid composition of example 1 is used.

Example 3

The use of a mixture of fatty substances and the process of example 1 are repeated except that 30 percent by weight of refined vacuumdeodorized fish oil having the fatty acid composition of example 1 is used.

Tasting of samples produced 2.5 months earlier of the fatty products containing 20 and 30 percent by weight, respectively, of refined fish oil having the fatty acid composition of example 1 showed that the taste and the mouth feel were neutral and that no disagreeable taste or aftertaste could be detected.

The fatty products tolerate storage at room temperature for at least four hours and, moreover, the taste remains the same for two months at a temperature below 10°C. After storage for two months at a temperature below 10°C the peroxide number is still less than about 1 meq/kg.

## Claims

1. A fatty product containing an inert gas, at least one polyunsaturated fatty acid and at least 10 percent by weight of solid fat and optionally an antioxidant, **characterized** in that the fatty product contains no more than 1 percent by weight of water, and that it further contains at least 1 percent by weight of a polyunsaturated fatty acid of the n-3 series comprising at least four double bonds and/or at least 0.5 percent by weight of a polyunsaturated fatty acid of the n-6 series comprising at least 3 double bonds.

2. A fatty product according to claim 1, **characterized** in that it comprises at least 1 percent by weight of a polyunsaturated fatty acid of the n-3 series comprising 5 double bonds, preferably eicosapentaenoic acid (20:5 n-3).

3. A fatty product according to claim 1, **characterized** in that it comprises at least 0.5 percent by weight of a polyunsaturated fatty acid of the n-6 series comprising at least three double bonds, preferably γ-linolenic acid (18:3 n-6).

4. A fatty product according to claim 1, **characterized** in that it contains from 10 percent by weight to 85 percent by weight of refined fish oil.

5. A fatty product according to claim 1, **characterized** in that it comprises from 10 percent by weight to 50 percent by weight of solid or hydrogenated fat and from 0 percent by weight to 80 percent by weight of vegetable oil.

6. A process for the production of a fatty product according to claim 1 and wherein an inert gas is whipped into a mixture of fatty substances which was initially softened by heating and which contains at least 10 percent by weight of solid fat at room temperature, and wherein the product thus produced is cooled, **characterized** in using a mixture of fatty substances containing at least 1 percent by weight of a polyunsaturated fatty acid of the n-3 series comprising at least four double bonds and/or at least 0.5 percent by weight of a polyunsaturated fatty acid of the n-6 series comprising at least 3 double bonds.

7. A process according to claim 6, **characterized** in using a mixture of fatty substances containing at least 1 percent by weight of a polyunsaturated fatty acid of the n-3 series comprising at least five double bonds, preferably eicosapentaenoic acid (20:5 n-3).

8. A process according to claim 6, **characterized** in using a mixture of fatty substances containing at least 0.5 percent by weight of a polyunsaturated fatty acid of the n-6 series comprising at least three double bonds, preferably γ-linolenic acid.

9. A process according to claim 6, **characterized** in using a mixture of fatty substances containing from 10 percent by weight to 85 percent by weight of refined fish oil.

10. A process according to claim 6, **characterized** in using a mixture of fatty substances containing from 10 percent by weight to 50 percent by weight of solid or hydrogenated fat and from 0 percent by weight to 80 percent by weight of vegetable oil.

## Patentansprüche

1. Fettprodukt, enthaltend ein Inertgas, wenigstens eine polyungesättigte Fettsäure und wenigstens 10 Gew.-% an festem Fett und wahlweise ein Antioxidans, dadurch gekennzeichnet, daß das Fettprodukt nicht mehr als 1 Gew.-% Wasser enthält, und daß es weiterhin wenigstens 1 Gew.-% einer polyungesättigten Fettsäure der n-3 Reihe, die wenigstens vier Doppelbindungen umfaßt, und-/oder wenigstens 0,5 Gew.-% einer polyungesättigten Fettsäure der n-6 Reihe, die wenigstens 3 Doppelbindungen umfaßt, enthält.

2. Fettprodukt nach Anspruch 1, dadurch gekennzeichnet, daß es wenigstens 1 Gew.-% einer polyungesättigten Fettsäure der n-3 Reihe, die Doppelbindungen umfaßt, vorzugsweise Eicosapentaensäure (20:5 n-3), umfaßt.

3. Fettprodukt nach Anspruch 1, dadurch gekennzeichnet, daß es wenigstens 0,5 Gew.-% einer polyungesättigten Fettsäure der n-6 Reihe, die wenigstens drei Doppelbindungen umfaßt, vorzugsweise γ-Linolensäure (18:3 n-6), umfaßt.

4. Fettprodukt nach Anspruch 1, dadurch gekennzeichnet, daß es von 10 Gew.-% bis 85 Gew.-% an raffiniertem Fischöl enthält.

5. Fettprodukt nach Anspruch 1, dadurch gekennzeichnet, daß es von 10 Gew.-% bis 50 Gew.-% an festem oder hydriertem Fett und von 0 Gew.-% bis 80 Gew.-% an pflanzlichem Öl umfaßt.

6. Verfahren zur Herstellung eines Fettproduktes nach Anspruch 1, bei welchem ein Inertgas in eine Mischung von Fettsubstanzen, die anfänglich durch Erwärmen erweicht wurde und die wenigstens 10 Gew.-% an festem Fett enthält, bei Zimmertemperatur eingeschlagen wird, und das so erzeugte Produkt abgekühlt wird, gekennzeichnet durch die Verwendung einer Mischung von Fettsubstanzen, welche wenigstens 1 Gew.-% einer polyungesättigten Fettsäure der n-3 Reihe, die wenigstens vier Doppelbindungen umfaßt, und/oder wenigstens 0,5 Gew.-% einer polyungesättigten Fettsäure der n-6 Reihe, die wenigstens 3 Doppelbindungen umfaßt, enthält.

7. Verfahren nach Anspruch 6, gekennzeichnet durch die Verwendung einer Mischung von Fettsubstanzen, die wenigstens 1 Gew.-% einer polyungesättigten Fettsäure der n-3 Reihe, die wenigstens fünf Doppelbindungen umfaßt, vorzugsweise Eicosapentaensäure (20:5 n-3), enthält.

8. Verfahren nach Anspruch 6, gekennzeichnet durch die Verwendung einer Mischung von Fettsubstanzen, die wenigstens 0,5 Gew.-% einer polyungesättigten Fettsäure der n-6 Reihe, die wenigstens drei Doppelbindungen umfaßt, vorzugsweise γ-Linolensäure, enthält.

9. Verfahren nach Anspruch 6, gekennzeichnet durch die Verwendung einer Mischung von Fettsubstanzen, die von 10 Gew.-% bis 85 Gew.-% an raffiniertem Fischöl enthält.

10. Verfahren nach Anspruch 6, gekennzeichnet durch die Verwendung einer Mischung von Fettsubstanzen, die von 10 Gew.-% bis 50 Gew.-% an festem oder hydriertem Fett und von 0 Gew.-% bis 80 Gew.-% an pflanzlichem Öl enthält.

## Revendications

1. Corps gras contenant un gas inerte, au moins un acide gras polyinsaturé et au moins 10 pour cent en poids de graisse solide, et éventuellement, un anti-oxydant, caractérisé en ce que le corps gras ne contient pas plus de 1 pour cent en poids d'eau, et en ce qu'il contient, en outre, au moins 1 pour cent en poids d'un acide gras polyinsaturé de la série n-3 comprenant au moins quatre double liaisons et/ou au moins 0,5 pour cent en poids d'un acide gras polyinsaturé de la série n-6 comprenant au moins 3 double liaisons.

2. Corps gras selon la revendication 1, caractérisé en ce qu'il comprend au moins 1 pour cent en poids d'un acide gras polyinsaturé de la série n-3 comprenant 5 double liaisons, de préférence de l'acide éicosapentaénoïque (20:5 n-3).

3. Corps gras selon la revendication 1, caractérisé en ce qu'il comprend au moins 0,5 pour cent en poids d'un acide gras polyinsaturé de la série n-6, comprenant au moins trois double liaisons, de préférence, de l'acide linolénique (18:3 n-6)

4. Corps gras selon la revendication 1, caractérisé en ce qu'il contient entre 10 et 85 pour cent en poids d'huile de poisson raffinée.

5. Corps gras selon la revendication 1, caractérisé en ce qu'il comprend entre 10 et 50 pour cent en poids de graisse solide ou hydrogénée et de 0 à 80 pour cent en poids d'huile végétale.

6. Procédé pour la production d'un corps gras selon la revendication 1, selon lequel est gaz inerte est incorporé dans un mélange de substances grasses qui a été initialement ramolli par chauffage et qui contient au moins 10 pour cent en poids de graisse solide à température ambiante, et selon lequel le corps ainsi produit est refroidi, caractérisé en ce qu'il utilise un mélange de substances grasses contenant au moins 1 pour cent en poids d'un acide gras polyinsaturé de la série n-3 comprenant au moins quatre double liaisons et/ou au moins 0,5 pour cent en poids d'un acide gras polyinsaturé de la série n-6 comprenant au moins 3 double liaisons.

7. Procédé selon la revendication 6, caractérisé en ce qu'il utilise un mélange de substances grasses contenant au moins 1 pour cent en poids d'un acide gras polyinsaturé de la série n-3 comprenant au moins cinq double liaisons, de préférence, de l'acide éicosapentaénoïque (20:5 n-3).

8. Procédé selon la revendication 6, caractérisé en ce qu'il utilise un mélange de substances grasses contenant au moins 0,5 pour cent en poids d'un acide gras polyinsaturé de la série n-6 comprenant au moins trois double liaisons, de préférence, de l'acide linolénique.

9. Procédé selon la revendication 6, caractérisé en ce qu'il utilise un mélange de substances grasses contenant entre 10 et 85 pour cent en poids d'huile de poisson raffinée.

10. Procédé selon la revendication 6, caractérisé en ce qu'il utilise un mélange de substances grasses contenant de 10 à 50 pour cent en poids de graisse solide ou hydrogénée et de 0 à 80 pour cent en poids d'huile végétale.